# EUROPEAN PATENT APPLICATION

(11) **EP 2 641 690 A1**
(43) Date of publication of application: **25.09.2013**
(21) Application number: 12161145.3
(22) Date of filing: 24.03.2012
(51) Int. Cl.: B23K 37/047, H02K 15/02

(54) **Method for manufacturing a rotor**

(71) Applicant: Alstom Technology Ltd., 5400 Baden (CH)
(72) Inventor: Irwanto, Bartolomeus, 5200 Brugg (CH); Eckert, Lothar, 5245 Habsburg (CH); Rotzinger, Ralf, 79730 Murg-Niederhof (DE)

(57) **Abstract**

The method for manufacturing a rotor (1) by welding or brazing a plurality of elements (2) together comprises vertically staking the elements (2) to form a pile (3), partially welding or brazing adjacent elements (2) with the pile (3) in the vertical configuration, bringing the pile (3) to an horizontal configuration, completely welding or brazing adjacent elements (2) with the pile (3) in the horizontal configuration. Then, the method includes defining at least a parameter indicative of at least the stress and/or deformation of the pile (3), providing a desired parameter value or range during welding or brazing of selected adjacent elements with the pile (3) in the vertical and/or horizontal configuration, and supporting the pile (3) to maintain the parameter at the desired parameter value or within the desired parameter range.

## Description

### TECHNICAL FIELD

The present disclosure relates to a method for manufacturing a rotor.

In particular the rotor is a rotor of an electric machine such as a turbogenerator (i.e. a synchronous generator to be connected to a gas or steam turbine) or a hydro generator (i.e. a synchronous generator to be connected to a hydro turbine) or an asynchronous generator or a synchronous or asynchronous generator; it is anyhow clear that the same method can also be used to manufacture rotor of other rotating electric machines such as motors.

### BACKGROUND

In order to manufacture rotors of rotating electric machines, it is known to weld a plurality of elements together.

In this respect, the elements are usually vertically stacked, then they are partially welded to connect all the elements together forming a pile, then the pile is brought in an horizontal configuration and the elements are completely welded forming the rotors.

Since during welding or brazing the conditions of the elements and pile can change, the quality of the welds can also change.

For example, conditions of the elements and pile can include the stress on the welds, the deformation of the pile, the stiffness of the pile, etc.; these factors can influence the quality of the welds, such as for example dimensions of the welds (and thus tolerances of the rotor) and strength of the welds (and thus strength of the rotor).

### SUMMARY

An aspect of the disclosure thus includes providing a method by which the quality of the welds can be improved.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:
Figures 1 through 3 are views of a pile in a vertical configuration;
Figures 4-5 are views of a pile in the horizontal configuration;
Figure 6 shows a rotor in the horizontal configuration;

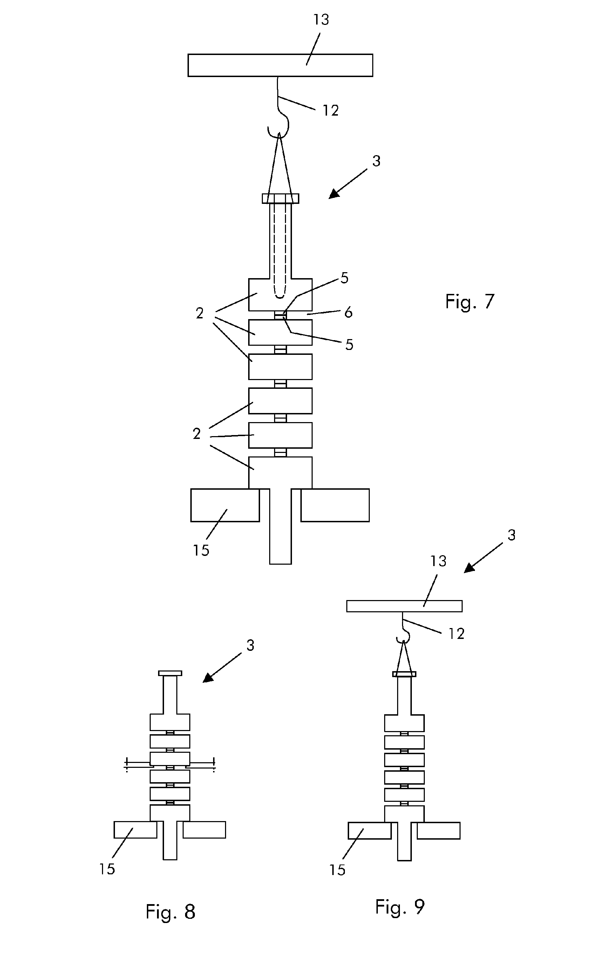

Figures 7 though 9 show alternative ways for vertically supporting the rotor; and
Figures 10 though 18 show alternative ways for horizontally supporting the rotor.

### DETAILED DESCRIPTION OF EXEMPLARY EMBODIMENTS

The method for manufacturing a rotor 1 by welding or brazing a plurality of elements 2 together comprises vertically stacking the elements 2 to form a pile 3.

Preferably the elements are provided with protruding collars 5 that let gaps 6 between adjacent elements 2 be defined (in these gaps 6 the welds are realised). In addition these collars 5 help centering of adjacent elements 2 one with respect to the other.

Then adjacent elements 2 are partially welded or brazed (arrow F1) with the pile 3 in the vertical configuration.

This can be done by melting the collars 5 and eventually also adding material into the gaps 6, without completely filling the gaps 6. For example during this step a welding or brazing torch is used and the pile 3 is rotated about its axis 7.

At the end of this step, the adjacent elements 2 are connected through semi welds 8.

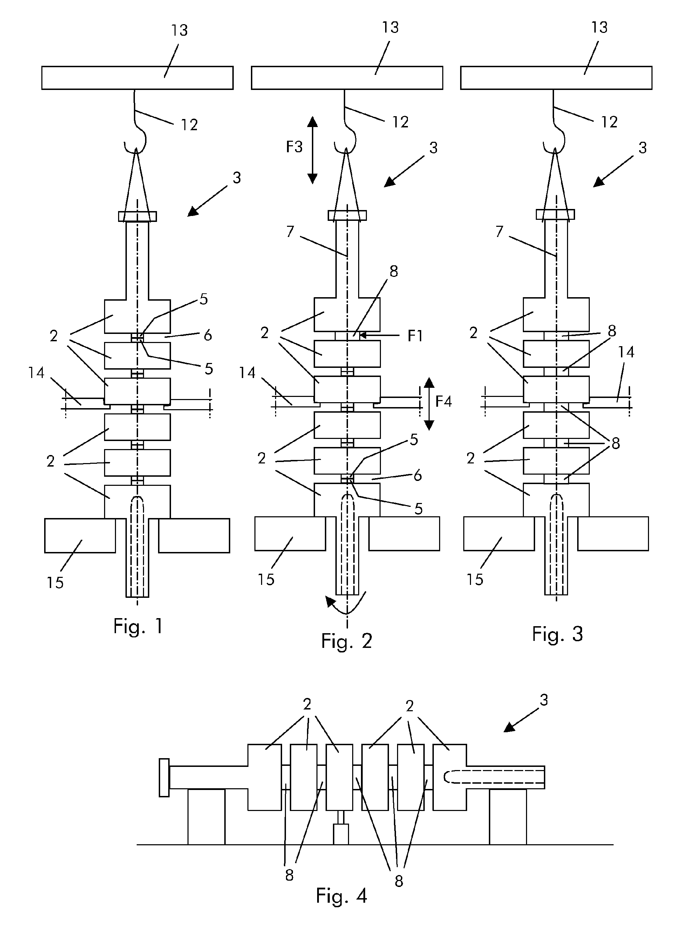

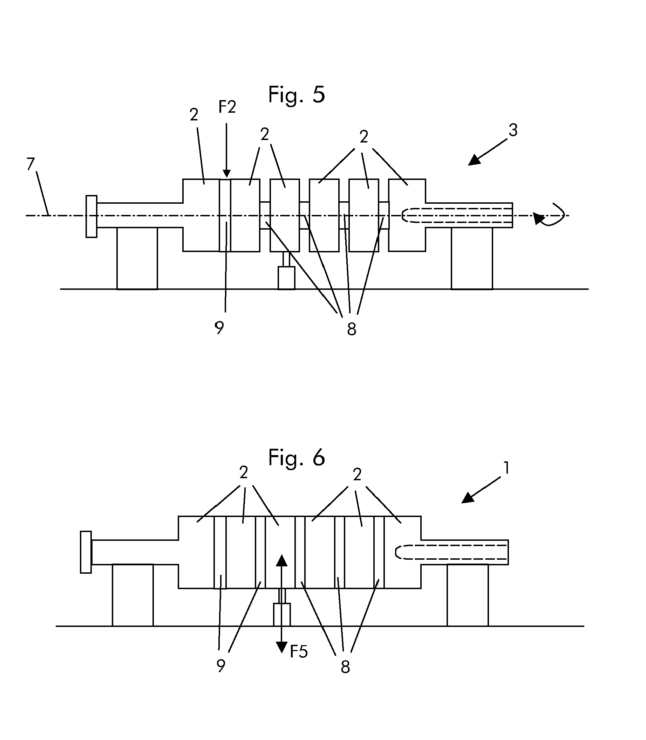

Then the pile 3 is brought into a horizontal configuration (figure 4) and the adjacent elements 2 are completely welded or brazed (figure 5, arrow F2).

Also in this case, a welding or brazing torch can be used and the pile 3 can be rotated about its axis 7.

At the end of this step, the adjacent elements 2 are connected through welds 9 to define a rotor 1 (figure 6).

Advantageously, parameters indicative of the stress and/or deformation of the pile 3 are defined before welding or brazing.

When the pile 3 is in the vertical configuration these parameters can include the pressure on the collars 5 (for example the pressure on each collar 5) and/or the deformation of the collars 5 (for example the compression of each collar 5) and/or the radial ran out of the elements 2 with respect to the axis 7; other examples for the parameters are anyhow possible.

When the pile 3 is in the horizontal configuration, the parameters can be the deformation of the pile 3 (at each semi weld 8) and/or the stress on the pile 3 (at each semi weld 8 or at particular positions of one or more elements 2) and/or the relative distance between adjacent elements 2. Also in this case other examples for the parameters are possible.

Thus, a desired parameter value or range during welding or brazing of selected adjacent elements with the pile in the vertical and/or horizontal configuration is provided.

In other words a value or a range for the parameter relative to each semi weld 8 or weld 9 is provided, such that the actual parameter when each of the semi weld 8 or weld 9 is realised is at the given value or within the given range.

Then, during welding or brazing, the pile 3 is supported to maintain the parameter at the desired parameter value or within the desired parameter range.

For example, when the semi welds 8 or welds 9 are realised, the welding or brazing sequence (i.e. the order of realising each semi weld 8 and/or weld 9) can be defined and the support conditions can be calculated, which permit the parameters have the desired parameter values or stay within the desired parameter ranges for each welding or brazing (because when each semi weld 8 or weld 9 is realised the features of the pile can change).

The support conditions are then adjusted to those calculated support conditions for each welding or brazing.

Alternatively, the parameter between the selected adjacent elements can be measured and the pile 3 can be supported such that the parameters have the desired parameter values or stay within the desired parameter range.

Preferably, in the cases above the support conditions are adjusted before each welding or brazing.

In particular, when the pile 3 is in the vertical configuration, adjacent elements at the upper part of the pile 3 are welded or brazed before adjacent elements 2 at the bottom part of the pile 3.

Preferably, at least an element at the top of the pile 3 is supported when the pile 3 is in the vertical configuration.

In this case supporting of the element at the top of the pile is preferably adjustable (F3).

For example, this can be done by supporting the top element 2 with a hook 12 whose position can be regulated; in this respect the hook 12 can be connected to a crane 13.

In addition, when the pile 3 is in the vertical configuration, also an element 2 at an intermediate position of the pile 3 and/or an element 2 at the bottom of the pile 3 can be supported (respectively via supports 14 and/or 15).

For example the support 14 for an intermediate element 2 can include shoulders that hold the intermediate element 2.

In case the pile 3 is supported also at an intermediate position of the pile 3, supporting at the intermediate position of the pile 3 is preferably adjustable (preferably in a vertical direction, F4).

The support 15 at the bottom of the pile 3 can include a turnable table.

In this way, by supporting the pile 3 at the top and/or at an intermediate position and/or at the bottom of the pile 3, and for example by welding or brazing the elements 2 at the top of the pile 3 before the elements 2 at the bottom of the pile 3, the pressure on and/or deformation of each semi weld 8 (during welding or brazing) can be regulated to be maintained at the desired value or within the desired range.

Then while the welds 9 are realised and the pile 3 is in the horizontal configuration, the pile 3 with the partially welded or brazed elements 2 is supported at two, three or more positions.

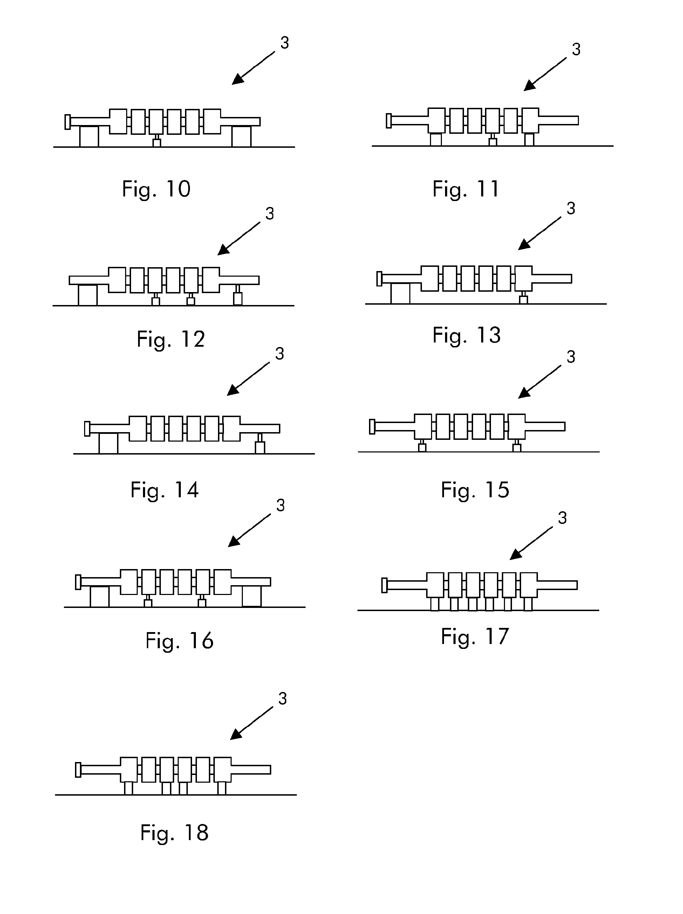

For example a number of elements 2 or all of the elements 2 can be supported by rigid (i.e. non-adjustable) supports, such that the parameter does not substantially change because of the welding or brazing (figures 17, 18).

Anyhow, preferably, supporting at at least one of the positions is adjustable (arrow F5), but also two, three or more (also all supports) can be adjustable.

Preferably the supporting at the intermediate position is adjustable. The adjustable support can be a hydraulic or oil or spring or pre-loaded spring or air support.

### EXAMPLE

In the following an example is described. The features described in the following can be implemented independently from one another.

The elements 2 are stacked in the vertical configuration on the turnable table 15 forming the pile 3. Then the hook 12 (for example it is a rotatable hook) connected to the crane 13 is connected to the top element 2 of the pile 3. Thus the first semi welds 8 are realised; for example the semi welds 8 are realised starting from the top of the pile 3. After the first semi weld 8, the hook position (for example its height) is adjusted and the second semi weld 8 is realised; the procedure is repeated until all the semi welds 8 are realised.

Then the pile is tilted in the horizontal configuration; for example the pile 3 is supported by three supports and the intermediate support is adjustable; anyhow the number of supports can be any such as two or more than three.

The intermediate support is regulated for the pile 3 having only semi welds 8 (i.e. no welds 9); a first weld 9 is thus realised. Then the intermediate support is regulated according to the actual configuration of the pile 3 (with one weld 9 and semi welds 8) and a second weld 9 is realised. The process is repeated until all the welds are realised.

Since the semi welds 8 and weld 9 are realised under controlled stress and/or deformation conditions, the quality (in term of strength and tolerance) is high.

Naturally the features described may be independently provided from one another.

In practice the materials used and the dimensions can be chosen at will according to the requirements and to the state of the art.

### REFERENCE NUMBERS

1 rotor
2 element
3 pile
5 collar
6 gap
7 axis of the rotor
8 semi weld
9 weld
12 hook
13 crane
14 support
15 turnable table
F1 part welding or brazing
F2 complete welding or brazing
F3 adjusting direction of the hook 12
F4 adjusting direction of the support 14
F5 adjusting with pile in horizontal configuration

## Claims

1. Method for manufacturing a rotor (1) by welding or brazing a plurality of elements (2) together, the method comprising
vertically staking the elements (2) to form a pile (3),
partially welding or brazing adjacent elements (2) with the pile (3) in the vertical configuration, bringing the pile (3) to an horizontal configuration, completely welding or brazing adjacent elements (2) with the pile (3) in the horizontal configuration, **characterised by**
defining at least a parameter indicative of at least the stress and/or deformation of the pile (3), providing a desired parameter value or range during welding or brazing of selected adjacent elements with the pile (3) in the vertical and/or horizontal configuration, and
supporting the pile (3) to maintain the parameter at the desired parameter value or within the desired parameter range.

2. The method according to claim 1, **characterised by** defining the welding or brazing sequence, and calculating the support conditions that permit the parameters have the desired parameter values or stay within the desired parameter ranges for each welding or brazing.

3. The method according to claim 2, **characterised by** adjusting the support conditions to the calculated support conditions for each welding or brazing.

4. The method according to claim 1, **characterised by** measuring the parameter between the selected adjacent elements (2), and supporting the pile (3) such that the parameters have the desired parameter values or stay within the desired parameter ranges.

5. The method according to claim 3 or 4, **characterised by** adjusting the support conditions before each welding or brazing.

6. The method according to claim 1, **characterised by** welding or brazing adjacent elements (2) at the upper part of the pile (3) before the adjacent elements (2) at the bottom part of the pile (3) when the pile (3) is in the vertical configuration.

7. The method according to claim 1, **characterised by** supporting at least an element (2) at the top of the pile (3) when the pile (3) is in the vertical configuration.

8. The method according to claim 7, **characterised in that** supporting the element (2) at the top of the pile (3) is adjustable.

9. The method according to claim 1, **characterised by** supporting at least an element (2) at an intermediate position of the pile (3) when the pile (3) is in the vertical configuration.

10. The method according to claim 9, **characterised in that** supporting the element (2) at an intermediate position of the pile (3) is adjustable.

11. The method according to claim 1, **characterised by** supporting an element (2) at the bottom of the pile (3).

12. The method according to claim 1, **characterised by** supporting the partially welded or brazed elements (2) at at least three positions when they are in the horizontal configuration.

13. The method according to claim 1, **characterised in that** supporting at at least one position is adjustable.

14. The method according to claim 12 and 13, **characterised in that** supporting at an intermediate position of the at least three positions is adjustable.
